# EUROPÄISCHE PATENTSCHRIFT

(11) **EP 3 215 752 B1**
(45) Veröffentlichungstag und Bekanntmachung des Hinweises auf die Patenterteilung: **14.08.2019**
(21) Anmeldenummer: 15766534.0
(22) Anmeldetag: 22.09.2015
(51) Int. Cl.: F16D 3/38, F16D 3/41

(54) **LENKWELLE MIT EINEM KREUZGELENK FÜR EIN KRAFTFAHRZEUG**
STEERING SHAFT HAVING A UNIVERSAL JOINT FOR A MOTOR VEHICLE
ARBRE DE DIRECTION AVEC ARTICULATION EN CROIX POUR VÉHICULE AUTOMOBILE

(30) Priorität: 07.11.2014 DE 102014116271
(43) Veröffentlichungstag der Anmeldung: 13.09.2017
(73) Patentinhaber: ThyssenKrupp Presta AG, 9492 Eschen (LI); thyssenkrupp AG, 45143 Essen (DE)
(72) Erfinder: GALEHR, Robert, 9486 Schaanwald (LI); SALTA, Tansu Koray, A-6800 Feldkirch (AT); BÖRSMA, Sape-Josef, A-6712 Bludesch (AT); KEPPLER-OTT, Thomas, A-6800 Feldkirch (AT); SCHEITZA, Christian, A-6700 Bludenz (AT)
(74) Vertreter: thyssenkrupp Intellectual Property GmbH
(86) Internationale Anmeldenummer: PCT/EP2015/071739
(87) Internationale Veröffentlichungsnummer: WO 2016/071037

(56) Entgegenhaltungen:
- WO-A1-2006/114138
- DE-A1- 2 120 569
- DE-A1- 2 122 575
- JP-A- S6 263 023

## Beschreibung

### Technisches Gebiet

Die vorliegende Erfindung betrifft ein Kreuzgelenk für eine Lenkwelle für ein Kraftfahrzeug, umfassend ein Kreuz mit zwei rechtwinklig zueinander gekreuzten Zapfenpaaren, die jeweils über ein Joch mit einem Wellenelement der Lenkwelle verbindbar sind, wobei jeder Zapfen über ein Radiallager in dem jeweiligen Joch radial gelagert ist und jeder Zapfen jeweils eine Stirnseite aufweist und wobei das Radiallager eine Lagerbüchse umfasst, wobei die Lagerbüchse einstückig einen Boden und einen Außenring aufweist, wobei die Stirnseiten zumindest eines der Zapfenpaare am Boden der Lagerbüchse in ihrer axialen Richtung gelagert sind.

### Stand der Technik

Die Lenkanlage eines Kraftfahrzeugs setzt die vom Fahrer am Lenkrad aufgebrachte Drehbewegung in eine Lenkwinkeländerung der gelenkten Räder des Fahrzeugs um. Durch ihre Bauweise und Auslegung soll sie ein komfortables und sicheres Lenken des Fahrzeugs in allen Situationen und bei allen Fahrgeschwindigkeiten ermöglichen. Es ist wünschenswert, dass die gesamte Lenkanlage, vom Lenkrad bis zu den gelenkten Rädern eine spielfreie Übertragung der vom Fahrer am Lenkrad eingeleiteten Lenkbewegung besonders im Bereich der Geradeausfahrstellung ermöglicht. Damit wird ein sicheres und ermüdungsfreies Führen des Fahrzeugs vor allem bei mittleren und hohen Fahrgeschwindigkeiten ermöglicht.

Aus dem gleichen Grund ist eine hohe Steifigkeit des Lenkstrangs wünschenswert. Diese ermöglicht eine präzise Fahrzeugführung sowie ein Durchfahren einer Kurve mit identischem Lenkradeinschlag bei sich ändernden Rückstellkräften, zum Beispiel durch eine sich ändernde Querbeschleunigung. Eine geringe Reibung im gesamten Lenkstrang stellt sicher, dass der Fahrer über die Reaktions- und Störkräfte an den Rädern eine haptische Rückmeldung über den vorhandenen Reibwert zwischen Straßen und Reifen erhält. Weiterhin unterstützt eine geringe Reibung die selbsttätige Rückstellfähigkeit der Räder in die Geradeausfahrtstellung.
Die mechanische Kopplung zwischen Lenkrad und Lenkgetriebe wird in der Regel über eine Lenkspindel und eine Lenkzwischenwelle realisiert. Da die Lenkspindel und die Lenkzwischenwelle aufgrund unterschiedlicher Fahrzeuganforderungen, wie zum Beispiel Bauraum - oder Crash-Anforderungen, für gewöhnlich nicht miteinander fluchten, sind im Lenkstrang Gelenke, bevorzugt zwei Kreuzgelenke vorgesehen. Die Kreuzgelenke sind dabei möglichst spielfrei und reibungsarm auszuführen. Dabei gilt es insbesondere Spiel in den Kreuzgelenken zu vermeiden, welches insbesondere um die Mittellage, auch Nulldurchgang genannt, der Lenkung zu einem indifferenten Fahrgefühl führen kann. Das Spiel kann über eine möglichst maßhaltige Fertigung der einzelnen Komponenten reduziert werden. Hierzu werden beispielsweise Lagerungen der Kreuzgelenke definiert vorgespannt und mit exakten Passungen versehen. Darüber hinaus können die auf die Zapfen der Kreuzgelenke wirkenden Größen, wie Reibung und Vorspannkraft, durch eine zusätzliche Lagerung der axialen Stirnflächen der Zapfen reduziert werden.

Aus der FR 2966214 B1 ist beispielsweise ein Kreuzgelenk bekannt, bei welchem ein Zapfen des Kreuzes eine konvexe Stirnfläche aufweist, die an dem Boden eines Nadellagers anliegt. Nachteil dieser Lösung ist die Toleranzanfälligkeit des Kreuzgelenks und die damit verbundene geringe Verdrehsteifigkeit.

Aus der DE 21 20 569 A1 ist ein Kreuzgelenk bekannt, welches gekreuzte Zapfenpaare mit Zapfen umfasst, von denen jeder jeweils eine Stirnseite aufweist und wobei das Radiallager eine Lagerbüchse umfasst, wobei die Lagerbüchse einstückig einen Boden und einen Außenring aufweist, wobei die Stirnseiten zumindest eines der Zapfenpaare am Boden der Lagerbüchse in ihrer axialen Richtung gelagert sind. Der Boden ist steif ausgestaltet, um große Justierkräfte in Richtung der Zapfenachse aufbringen zu können. Entsprechend können nur große Vorspannkräfte realisiert werden.

### Darstellung der Erfindung

Ausgehend von dem bekannten Stand der Technik ist es eine Aufgabe der vorliegenden Erfindung, ein verbessertes Kreuzgelenk anzugeben, bei dem die Vorspannkraft am Radiallager reduziert werden kann, ohne dass die Axialpositionierung des Zapfens beeinträchtigt wird..

Diese Aufgabe wird mittels einer Vorrichtung mit den Merkmalen des Anspruchs 1 gelöst. Vorteilhafte Ausgestaltungen ergeben sich aus den Unteransprüchen.

Entsprechend wird ein Kreuzgelenk für eine Lenkwelle für ein Kraftfahrzeug angegeben, welche ein Kreuz mit zwei rechtwinklig zueinander gekreuzten Zapfenpaaren, die jeweils über ein Joch mit einem Wellenelement der Lenkwelle verbindbar sind, wobei jeder Zapfen über ein Radiallager in dem jeweiligen Joch radial gelagert ist und jeder Zapfen jeweils eine Stirnseite aufweist und wobei das Radiallager eine Lagerbüchse umfasst, wobei die Lagerbüchse einstückig einen Boden und einen Außenring aufweist, wobei die Stirnseiten zumindest eines der Zapfenpaare am Boden der Lagerbüchse in ihrer axialen Richtung gelagert sind, umfasst. Erfindungsgemäß steht die Stirnseiten der Zapfen zumindest eines der Zapfenpaare mit dem Boden unter rein elastischer Vorspannung in Kontakt, wobei die in Kontakt stehenden Stirnseiten im Kontaktbereich konvex ausgebildet sind und der Boden zur Ausbildung der Vorspannung rein elastisch verformt ist, wobei der Boden der Lagerbüchse elastisch ausgebildet ist und von seinem Zentrum ausgehend im Zustand vor der Montage mindestens zu 25% eine ebene Fläche zur Kontaktierung der Stirnseite eines Zapfens aufweist.

Durch eine ebene Ausbildung des Bodens der Lagerbüchse, besonders bevorzugt mit einer konstanten Wanddicke, wird eine gute Elastizität gefördert, da Versteifungselemente fehlen, die der elastischen Rückfederung des Bodens entgegenwirken.

Durch die Federwirkung der Lagerbüchse, welche auf die elastische Ausführung des Bodens der Lagerbüchse zurückzuführen ist, kann sichergestellt werden, dass die Stirnseite eines Zapfens stets in Kontakt mit dem Boden der Lagerbüchse steht, wobei aber gleichzeitig die Presskraft auf die Stirnseite des Zapfens relativ gering bleibt. Somit wird ein Spiel zwischen der Stirnseite eines Zapfens und dem Boden der Lagerbüchse vermieden, was sich positiv auf die Steifigkeit des Kreuzgelenks, insbesondere in der Mittenlage, auswirkt. Gleichzeitig bleibt die Reibkraft, die über die Stirnseite des Zapfens eingebracht wird vergleichsweise gering.
Die einstückige Ausbildung der Lagerbüchse mit einem Boden und einem Außenring bedeutet, dass der Außenring und der Boden aus einem einzigen Stück gefertigt sind, ohne dass es einer Fügeoperation zwischen Boden und Außenring bedarf. Bevorzugt ist das Teil aus einem einzigen Blechumform- und Stanzteil gebildet.

Durch den Kontakt der Stirnseite der Zapfen mit dem Boden unter einer rein elastischen Vorspannung wird eine Axiallagerung des jeweiligen Zapfens ausgebildet, wodurch zum einen die Reibung und zum anderen die Vorspannkraft am Radiallager reduziert werden kann, ohne dass die Axialpositionierung des Zapfens beeinträchtigt wird. Damit kann auch die Rollreibung, welche zwischen dem Radiallager und einer Lauffläche des Zapfens herrscht, reduziert werden, da mit der erfindungsgemäßen Anordnung eine höhere Lagerluft gewählt werden kann. Dadurch ist ein verbessertes Lenkgefühl im Bereich um eine Mittenlage möglich bei gleichzeitig gleichem oder reduziertem Spiel gegenüber einer herkömmlichen Anordnung.

Darüber hinaus kann ein Losbrechen oder Kleben der Lenkung, welches auf einen Übergang von Haft- zu Gleitreibung zurückzuführen ist, reduziert werden. Ferner wird durch die verminderte Reibung in den Radiallagern bei niedriger Fahrzeuggeschwindigkeit am Ende eines Abbiegevorgangs ein selbständiger Rücklauf des Lenkrads in die Mittenlage begünstigt.

Des Weiteren reduzieren sich die Anforderungen an die Maßhaltigkeit des Kreuzgelenks bezüglich der Radiallager und bezüglich der Länge der Zapfen. So können geringfügige Abweichungen der Länge eines Zapfenpaars über die Vorspannungsvorrichtung an mindestens einer Stirnseite eines Zapfenpaars ausgeglichen werden. Die hohen Toleranzanforderungen die an Zapfenpaare gestellt werden, die in herkömmlichen starren Axiallagerungen gelagert werden, entfallen. Ein geringfügig zu langes Zapfenpaar führt nicht unmittelbar dazu, dass das Zapfenpaar in der Axiallagerung verklemmt und keine Rotation des Zapfenpaars relativ zu der Axiallagerung mehr möglich ist. Auch steigt die Reibung zwischen dem Zapfenpaar und der vorgespannten Axiallagerung bei einem geringfügig zu langem Zapfenpaar nicht sofort in einen kritischen Bereich. Vielmehr kann die vorgespannte Axiallagerung in diesem Fall nachgeben, um trotz einer Überschreitung der idealen Länge des Zapfenpaares eine nahezu punktförmige Axiallagerung, welche sich durch eine geringe Rollreibung auszeichnet, aufrechtzuerhalten.
Das Unterdrücken einer axialen Verschiebung eines Zapfenpaares aufgrund der rein elastischen Vorspannung bewirkt, dass der Mittelpunkt des Jochs beziehungsweise der Schnittpunkt der beiden über das Kreuzgelenk miteinander verbindbaren Achsen insbesondere in der Mittenlage, das heißt, wenn sich die Lenkung in einer Geradeausstellung der Räder des Kraftfahrzeugs befindet, mit dem Mittelpunkt des Kreuzgelenks beziehungsweise dem Schnittpunkt der Rotationsachsen der beiden Zapfenpaare zusammenfällt. Auf diese Weise können die auf die Zapfenpaare aufgebrachten Axialkräfte gering gehalten werden, wodurch sich ein drehsteifes Verhalten des Kreuzgelenks insbesondere in der Mittenlage ergibt. Somit kann insgesamt die Rollreibung reduziert werden und gleichzeitig die Verdrehsteifigkeit in der Mittenlage erhöht werden.

Die Stirnseite des Zapfens ist bevorzugt im Kontaktbereich konvex ausgebildet. Mit konvex ist gemeint, dass die Stirnseite eine in Bezug auf den Zapfen nach außen gewölbte Krümmung aufweist. Dadurch wird ermöglicht, dass der Kontaktbereich zwischen der Stirnseite des Zapfens und des Bodens möglichst gering ist, so dass die Reibung reduziert ist. Im Idealfall kann so zwischen der Stirnseite und dem Boden der Lagerbüchse lediglich ein Punktkontakt bereitgestellt werden, so dass eine Axialpunktlagerung des Zapfens vorliegt. Unter Punktkontakt ist stets ein Kontakt im technischen Sinne zu verstehen, der eine reale Kontaktfläche aufweist. Da der Zapfen im Betrieb der Lenkung um seine Längsachse rotiert werden kann, ergibt sich zwischen der Stirnseite und dem Boden der Lagerbüchse eine punkt- beziehungsweise kreisförmige Gleitfläche.

Diese wird auch als mittlerer Druckdurchmesser beschrieben, welcher zur Ermittlung der Rotationsreibung heranzuziehen ist. Je größer die Gleitfläche, desto größer ist entsprechend auch die Rotationsreibung zwischen der Stirnseite des Zapfens und dem Boden der Lagerbüchse. Es gilt die Rotationsreibung gering zu halten, da sie insgesamt zu einer Erhöhung der Rollreibung beiträgt.

Die konvexe Ausführung der Stirnseite ermöglicht eine geringe Gleitfläche zwischen der Stirnseite des Zapfens und dem Boden der Lagerbüchse, woraus eine vergleichsweise geringe Rotationsreibung resultiert. Somit führt die konvexe Stirnseite des Zapfens im Ergebnis zu einer verringerten Rollreibung des Kreuzgelenkes.

In einer bevorzugten Ausgestaltung fällt ein Radienmittelpunkt der konvexen Stirnseite mit einem Mittelpunkt des Kreuzes zusammen. Dadurch kann sichergestellt werden, dass die Gleitfläche und somit der mittlere Druckdurchmesser zwischen der konvexen Stirnseite des Zapfens und dem Boden konstant ist. Insgesamt entstehen somit geringere Toleranzanforderungen für den Zusammenbau des Kreuzgelenks und insbesondere des Zapfens und dem Boden der Lagerbüchse. So fallen geringe Abweichungen der Positionierung der konvexen Stirnseite relativ zu dem Boden der Lagerbüchse, beispielsweise durch eine geringfügige Neigung des Zapfens in der Axialrichtung, weniger stark ins Gewicht, da stets eine nahezu gleich große Gleitfläche vorliegt auch wenn die Stirnseite nicht exakt an ihrem Mittelpunkt kontaktiert wird.

Darüber hinaus können durch die Wahl des Mittelpunkts des Kreuzes als Radienmittelpunkt für die konvexe Stirnseite und die sich daraus ergebende konstante Größe der Gleitfläche auch Schwankungen des Betrags der Rotationsreibung zwischen der konvexen Stirnseite des Zapfens und dem Boden der Lagerbüchse während des Betriebs der Lenkwelle vermindert werden. Somit wird insbesondere eine haptische Rückmeldung von Reaktions- und Störkräften an den Rädern, welche der Fahrer über den Lenkstrang und insbesondere die Lenkwelle erfährt, nicht durch Schwankungen der Rotationsreibung des Kreuzgelenks beeinträchtigt.

In einer bevorzugten Weiterbildung sind die Zapfen paarweise aufeinander zu vorgespannt. Dadurch reduzieren sich die Anforderungen an die Maßhaltigkeit des gesamten Kreuzgelenks in Bezug auf die Länge der Zapfenpaare. So können geringfügige Abweichungen der Länge eines Zapfenpaars über den Boden der Lagerbüchse an mindestens einer Stirnseite eines Zapfenpaars ausgeglichen werden. Der Boden der Lagerbüchse ist dabei jeweils mit einem Arm eines Jochs verbunden, um eine axiale Vorspannung auf mindestens ein Zapfenpaar aufzubringen.

In einer weiter bevorzugten Ausführungsform weisen alle konvexen Stirnseiten den gleichen sphärischen Durchmesser auf. Dadurch wird das Auftreten einer gleichen Rollreibung an allen konvexen Stirnseiten des Kreuzgelenks begünstigt. Eine nahezu identische Rotationsbeziehungsweise Rollreibung an allen konvexen Stirnseiten des Kreuzgelenks führen zu einem homogeneren Verhalten des Kreuzgelenks, welches insbesondere in der Mittenlage eine hohe Verdrehsteifigkeit bereitstellt.

In einer weiter bevorzugten Ausgestaltung ist das Radiallager ein Nadellager. Nadellager zeichnen sich dadurch aus, dass sie besonders raumsparend sind. Weisen die Zapfen eine im Vergleich zum Ausgangsmaterial härtere Oberfläche auf, so kann die Zapfenoberfläche als Laufbahn für die Nadelrollen genutzt werden, ohne dass es eines zusätzlichen Innenrings bedarf. Ferner zeichnen sich Nadellager durch ihre Montagefreundlichkeit aus. Entsprechend können die Nadellager in die jeweiligen Arme der Joche eingepresst werden, ohne dass es einer weiteren axialen Fixierung bedarf. Darüber hinaus begünstigen Nadellager vorteilhafte Reibungszustände, aufgrund der geringen Wälzreibung zwischen den Nadelrollen und den Zapfen.

In einer weiteren Ausführungsform ist die Lagerbüchse in Form einer Nadelbüchse ausgebildet.

Entsprechend ist die Lagerstelle an einem Wellenende beziehungsweise an der Stirnseite des Zapfens abgeschlossen. Dabei liegt die Stirnseite des Zapfens am Boden der Nadelbüchse an. Die von der Lagerbüchse beziehungsweise der Nadelbüchse ausgehende, auf den Zapfen wirkende Vorspannung hängt von den Materialeigenschaften und der geometrischen Ausgestaltung der Nadelbüchse ab.

Da die Nadelbüchse durch die Laufbahn des Zapfens radial geführt wird, ist die Positionierung des Bodens der der Nadelbüchse gegenüber der Stirnseite des Zapfens festgelegt. Entsprechend kann die Gleitfläche, welche durch die Berührung der Stirnseite des Zapfens und des Bodens der Nadelbüchse zur Ausbildung einer Axialpunktlagerung gebildet wird, allein durch die Geometrie der Nadelbüchse festgelegt werden.

Zusätzlich schützt der Boden der Nadelbüchse die Lagerstelle vor dem Eintritt von Schmutz und/oder Spritzwasser. Zum Schutz vor Verunreinigungen und dem Eindringen von abrasiven Partikeln kann ein zusätzliches Dichtungselement vorgesehen sein, beispielsweise ein O-Ring. Bevorzugt weist der Boden der Lagerbüchse von seinem Zentrum ausgehend im Zustand vor der Montage mindestens zu 50% eine ebene Fläche zur Kontaktierung der Stirnseite eines Zapfens auf.

Versuche haben ergeben, dass ein Boden mit 50% ebener Fläche besonders gute Ergebnisse in Hinsicht auf die Verdrehsteifigkeit des erfindungsgemäßen Kreuzgelenks geliefert haben.

Ganz besonders bevorzugt ist der Boden der Lagerbüchse von seinem Zentrum ausgehend im Zustand vor der Montage zu 100% eine ebene Fläche, zur Kontaktierung der Stirnseite eines Zapfens. Dieser vollständig ebene Boden lieferte in entsprechenden Versuchen die besten Ergebnisse in Hinsicht auf die Verdrehsteifigkeit des erfindungsgemäßen Kreuzgelenks.

Allerdings ist in allen Fällen mit Vorteil ein kleiner Freiraum, der auch als Hinterschnitt bezeichnet werden kann, am Umfang des Bodens vorzusehen, zur Freistellung von Lagerelemente, insbesondere der bevorzugt eingesetzten Nadeln.

Die ebene Fläche des Bodens der Lagerbüchse steht senkrecht zur Längsachse eines Zapfens im Zustand vor der Montage. Dabei gilt, dass umso größer ein ebener Flächenanteil des Bodens der Lagerbüchse ausfällt, umso elastischer die Federeigenschaften des Bodens der Lagerbüchse sind oder mit anderen Worten umso größer der ebene Flächenanteil des Bodens, umso geringer ist die Federkonstante des Bodens.

Um die gewünschte Vorspannwirkung des Bodens der Lagerbüchse zu erreichen, ist es entsprechend von Vorteil, einen möglichst großen Bereich des Bodens der Lagerbüchse in Form einer ebenen Fläche auszubilden. Darüber hinaus lassen sich über die Größe der ebenen Fläche des Bodens der Lagerbüchse die elastischen Eigenschaften je nach dem Anwendungsprofil des Kreuzgelenks festlegen.

In einer bevorzugten Weiterbildung ist an jeder Stirnseite eines Zapfens eines Zapfenpaares ein Boden der Lagerbüchse unter einer rein elastischen Vorspannung angeordnet. Dadurch kann die Vorspannung von zwei entgegengesetzt wirkenden Böden genutzt werden, um ein Zapfenpaar axial zu lagern. Daraus ergeben sich insgesamt geringere Anforderungen an die Maßhaltigkeit eines Zapfenpaars in Richtung der Längsachse, es kann aber dennoch ein Zusammenfallen des Schnittpunkts der Wellenelemente mit dem Schnittpunkt der Zapfenpaare erreicht werden.

In einer bevorzugten Weiterbildung ist das Kreuz des Kreuzgelenks als Kaltfließpressteil ausgebildet, wobei zumindest die Stirnseiten eines Zapfenpaares durch reine Umformung erzeugt wurden. Durch die Ausbildung des Kreuzes als Kaltfließpressteil können die Bauteilkosten reduziert werden. Weiterhin können so verbesserte Materialeigenschaften des Kreuzes erreicht werden.

In einer bevorzugten Weiterbildung ist die Lagerbüchse mit dem Joch verstemmt. Durch dieses Verstemmen wird das Joch so umgeformt, dass die Lagerbüchse durch einen Formschluss an einer Verschiebung der Lagerbüchse in Richtung der ihr zugeordneten Roationsachse gehindert wird. Diese Verstemmung bietet den Vorteil, dass auf zusätzliche Bauteile zur Sicherung der Lagerbüchse gegenüber dem Joch verzichtet werden kann.

Besonders bevorzugt wird durch die Verstemmung der Boden der Lagerbüchse gegenüber der Stirnseite des Zapfens rein elastisch verformt oder mit anderen Worten wird der Boden der Lagerbüchse rein elastisch vorgespannt. Die Vorspannung kann dabei im Montageprozess gemessen und als Maßstab für die richtige Positionierung der Lagerbüchse eingesetzt werden. Dadurch können Toleranzen in einfacher Weise ausgeglichen werden. Insgesamt kann damit die Montage vereinfacht werden und die Montagezeit reduziert werden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch eine perspektivische Ansicht einer Lenksäule, die ein erfindungsgemäßes Kreuzgelenk in einem Einbauzustand zeigt,
- Figur 2: schematische Darstellung des Kreuzgelenks entsprechend Figur 1 in einer Schnittansicht,
- Figur 3: schematische Darstellung eines Montageschritts in einer Schnittansicht des Kreuzgelenks entsprechend der Figur 2,
- Figur 4: schematische Darstellung einer fertig montierten Lagerung des Kreuzgelenks entsprechend der Figur 2 in Schnittansicht,
- Figur 5: schematisch eine Schnittansicht eines Kreuzgelenks mit einer alternativen Ausführungsform der Lagerbüchse, und
- Figur 6: schematisch eine Seitenansicht eines Kreuzes der vorstehenden Figuren.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

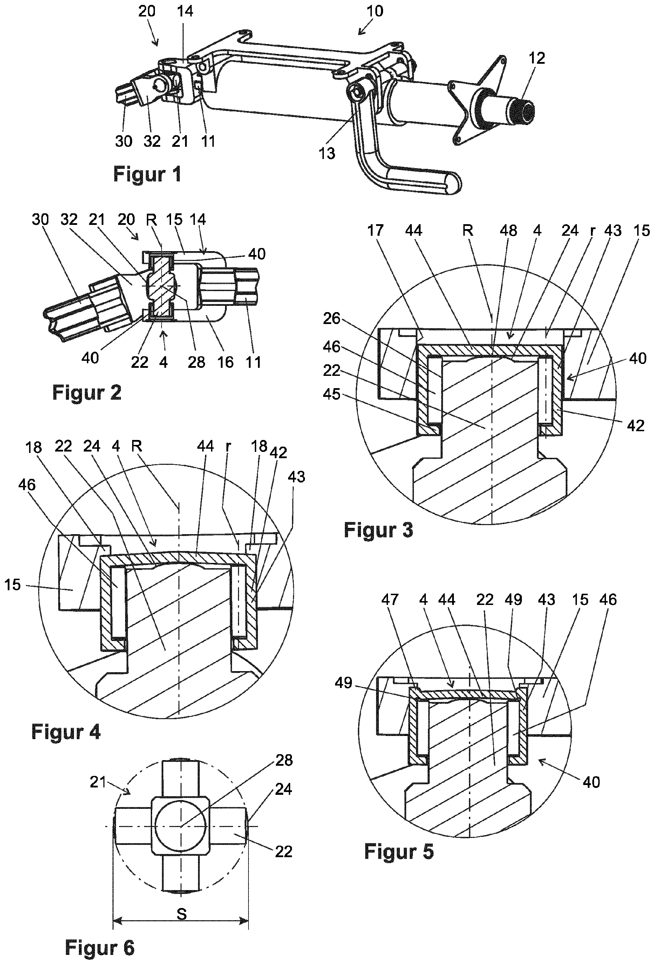

Figur 1 zeigt eine Lenksäule 10 mit einem Lenkradanschluss 12 und einer manuellen Verstelleinheit 13. Durch das Innere der Lenksäule 10 hindurch verläuft eine obere Lenkwelle 11. Die obere Lenkwelle 11 ist mit einem Joch 14 verbunden. Das Joch 14 und die obere Lenkwelle 11 können miteinander verschraubt oder verstemmt oder auch einstückig ausgebildet sein. In dem Joch 14 ist ein Kreuz 21 gelagert, wobei jeweils ein Zapfen 22 eines Zapfenpaares des Kreuzes 21 in einem Arm 15, 16 des Jochs 14 gelagert ist.

Ein weiteres Zapfenpaar des Kreuzes 21 ist in einem Joch 32 einer Lenkzwischenwelle 30 gelagert. Die Anordnung der Joche 14, 32 und des Kreuzes 21 bildet ein Kreuzgelenk 20, auch als Universalgelenk bekannt, aus, mittels welchem ein Drehmoment zwischen der oberen Lenkwelle 11 und einer Lenkzwischenwelle 30 übertragen werden kann.

Das Kreuz 21 ist aus Umformstahl hergestellt und bevorzugt kalt umgeformt. Alternativ kommen auch Aluminiumlegierungen oder andere hochfeste Metalle zum Einsatz. Denkbar und möglich ist auch der Einsatz von faserverstärkten Kunststoffen, insbesondere unter dem Einsatz von Kohlenstofffasern, Glasfasern oder Aramidfasern.

Figur 2 zeigt eine Detailansicht des Kreuzgelenks 20 aus Figur 1. Von dem Ende der oberen Lenkwelle 11 aus erstreckt sich das Joch 14, welches als Mitnehmer des Kreuzes 21 dient. Das Joch 14 ist gabelförmig, so dass sich ein erster Arm 15 und ein zweiter Arm 16 des Jochs 14 gegenüberliegen. Der erste Arm 15 und der zweite Arm 16 weisen jeweils eine Durchgangsbohrung 17, die konzentrisch zueinander angeordnet sind, zur Aufnahme eines Radiallagers 40 auf. Ein Radiallager 40 dient dabei zur Aufnahme jeweils eines Zapfens 22 eines Zapfenpaares des Kreuzes 21. Die Zapfen 22 sind dabei drehbar gelagert um die Rotationsachse R.

Das in Figur 2 gezeigte Joch 32 weist den gleichen Aufbau wie das Joch 14 auf. Entsprechend sind zwei Radiallager 40 zur Aufnahme von jeweils einem Zapfen 22 in zwei sich gegenüberliegenden Armen 15, 16 des Jochs 32 angeordnet. Insgesamt sind somit jeweils zwei sich gegenüberliegende Zapfen 22 über Radiallager 40 in dem Joch 14 beziehungsweise dem Joch 32 aufgenommen. Daraus ergeben sich für das Kreuz 21 zwei senkrecht zueinander liegende Schwenkachsen, welche sich genau im Mittelpunkt 28 des symmetrisch aufgebauten Kreuzes 21 schneiden. Von dem Joch 32 erstreckt sich die Lenkzwischenwelle 30 in Richtung eines Lenkgetriebes.

Figur 3 ist das Radiallager 40 zu entnehmen, welches in der Durchgangsbohrung 17 des ersten Arms 15 des Jochs 14 noch nicht vollständig eingefügt ist. Die Positionierung des Radiallagers 40 in der Durchgangsbohrung 17 wird bei dabei durch zwei sich gegenüberliegende Vorsprünge 18 durch einen anstoßenden Kontakt festgelegt, die bei der Verstemmung (siehe Figur 4) erzeugt werden.

Das Radiallager 40 weist eine Lagerbüchse 42 auf, in welcher Nadelrollen 46 angeordnet sind, deren Rotationsachsen r parallel zu einer Rotationsachse R des Zapfens 22 verlaufen. Die Nadelrollen 46 stehen mit einer Lauffläche 26 des Zapfens 22 und einem Außenring 43 der Lagerbüchse 42 in Kontakt. Alternativ kann zwischen den Nadelrollen und der Lauffläche auch ein Innenring angeordnet sein. Die Nadelrollen 46 werden über einen Boden 44 der Lagerbüchse 42 und eine Borde 45, welche umfänglich um eine Lageröffnung verläuft, in axialer Richtung des Radiallagers 40 in Position gehalten.

Der Zapfen 22 wird durch das Radiallager 40 sowohl radial als auch axial gelagert.

Der Zapfen 22 weist auf einer Stirnseite 24 eine konvexe Krümmung auf, welche mit dem Boden 44 der Lagerbüchse 42 in Kontakt steht. Der Kontakt zwischen dem Boden 44 und der konvexen Stirnseite 24 bildet eine zusätzliche Axiallagerung des Zapfens 22. Im Idealfall liegt zwischen der Stirnseite 24 und dem Boden 44 lediglich ein Punktkontakt im technischen Sinn vor, so dass von einer Axialpunktlagerung ausgegangen werden kann. Der Zapfen 22 wird in Axialrichtung über den Boden 44 der Lagerbüchse 42 vorgespannt, so dass der Boden 44 der Lagerbüchse 42 als Vorspannungsvorrichtung 4 dient. Der Boden 44 weist im Beispiel eine vor der Montage vollständige eben ausgebildete Fläche auf. Nach der Montage, wie dies in Figur 4 veranschaulicht ist, wölbt sich der Boden unter elastischer Verformung.

Um enge Toleranzbereiche zur Bereitstellung der Axialpunktlagerung zu umgehen, ist, wie Figur 4 zu entnehmen ist, der Boden 44 der Lagerbüchse 42 rein elastisch gegenüber der Stirnseite 24 des Zapfens 22 vorgespannt.. Die konvexe Form der Stirnseite 24 stellt sicher, dass auch bei einer, wie in Figur 4 gezeigten, elastischen Auslenkung bzw. Durchbiegung des Bodens 44 aufgrund einer Axialkraft des Zapfens 42, der Kontaktbereich zwischen der Stirnseite 24 und dem Boden 44 möglichst klein bleibt. Rotiert die Stirnseite 24 relativ zu dem Boden 44, bildet der Kontaktbereich zwischen der Stirnseite 24 und dem Boden 44 eine Gleitfläche 48, welche eine Rotationsreibung zur Folge hat, welche wiederum die auf den Zapfen 22 wirkende Rollreibung erhöht. Die konvex gekrümmte Stirnseite 24 des Zapfens 22 dient dazu, die Gleitfläche 48 möglichst klein zu halten. In der vorliegenden Ausführungsform weist die Gleitfläche 48 einen Durchmesser von 3 mm auf. Die Gleitfläche kann jedoch abhängig von der Dimensionierung des Kreuzgelenks und/oder der Intensität der Belastung auch einen kleineren oder größeren Durchmesser aufweisen. Vorzugsweise ist der Durchmesser jedoch möglichst klein.

Figur 5 ist ebenfalls eine detaillierte Schnittansicht zu entnehmen, wobei ein Zapfen 22 über ein Radiallager 40 in einem ersten Arm 15 eines Jochs gelagert ist. Das vorgespannte Radiallager 40 unterscheidet sich von dem in Figur 4 gezeigten Radiallager dadurch, dass der Boden 44 des Radiallagers einen ringförmigen Bord 47 aufweist, welche sich in axialer Richtung von einer äußeren Oberfläche des Bodens 44 erstreckt. Darüber hinaus weist das Radiallager 40 auf der Innenseite der Lagerbüchse 42 in einem Übergangsbereich zwischen dem Außenring 43 zu dem Boden 44 eine umlaufende Freistellung 49 auf. Diese Freistellung 49 dient als ein Freistich, um Zwangszustände der Nadelrollen 46 beim Anlaufen an den Boden 44 zu vermeiden. Der außenseitige Bord 47 ermöglicht die Darstellung der innenseitigen Freistellung 49 der Lagerbüchse 42. Es wäre auch denkbar und möglich, die Freistellung in einer Zerspanungsoperation als Freistich herzustellen.

Der Figur 6 ist eine Vorderansicht des Kreuzes 21 zu entnehmen. Dabei sind alle vier Zapfen 22 des Kreuzes 21 gezeigt, wobei jeweils zwei sich gegenüberliegende Zapfen 22 konzentrisch zueinander angeordnet sind.

Die Radienmittelpunkte der konvexen Stirnseiten 24 der Zapfen 22 fallen mit dem Mittelpunkt 28 des Kreuzes 21 zusammen. Entsprechend liegen alle vier konvexen Stirnseiten 24 auf einer Oberfläche einer fiktiven Kugel, deren Mittelpunkt dem Mittelpunkt 28 des Kreuzes entspricht. Daraus ergibt sich, dass zwei sich gegenüberliegende Stirnseiten 24 durch einen sphärischen Durchmesser S voneinander beabstandet sind.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezuqszeichenliste

- 10: Lenksäule
- 11: Lenkwelle
- 12: Lenkradanschluss
- 13: Manuelle Verstelleinheit
- 14: Joch
- 15: Erster Arm
- 16: Zweiter Arm
- 17: Durchgangsbohrung
- 18: Vorsprung
- 20: Kreuzgelenk
- 21: Kreuz
- 22: Zapfen
- 24: Stirnseite
- 26: Lauffläche
- 28: Mittelpunkt
- 30: Lenkzwischenwelle
- 32: Joch
- 4: Vorspannungsvorrichtung
- 40: Radiallager
- 42: Lagerbüchse
- 43: Außenring
- 44: Boden
- 45: Borde
- 46: Nadelrolle
- 47: Bord
- 48: Gleitfläche
- 49: Freistellung

- S: Sphärischer Durchmesser
- R: Rotationsachse
- r: Rotationsachse

## Patentansprüche

1. Kreuzgelenk (20) für eine Lenkwelle (11) für ein Kraftfahrzeug, umfassend ein Kreuz (21) mit zwei rechtwinklig zueinander gekreuzten Zapfenpaaren, die jeweils über ein Joch (14, 32) mit einem Wellenelement der Lenkwelle (11) verbindbar sind, wobei jeder Zapfen (22) in seiner radialen Richtung über ein Radiallager (40) in dem jeweiligen Joch (14, 32) radial gelagert ist und wobei jeder Zapfen (22) jeweils eine Stirnseite (24) aufweist und wobei das Radiallager eine Lagerbüchse (42) umfasst, wobei die Lagerbüchse einstückig einen Boden (44) und einen Außenring (43) aufweist, wobei die Stirnseiten (24) zumindest eines der Zapfenpaare am Boden (44) der Lagerbüchse (42) in ihrer axialen Richtung gelagert sind,
**dadurch gekennzeichnet, dass**
die Stirnseiten (24) der Zapfen (22) zumindest eines der Zapfenpaare mit dem Boden (44) unter rein elastischer Vorspannung in Kontakt stehen, wobei die in Kontakt stehenden Stirnseiten (24) im Kontaktbereich konvex ausgebildet sind und der Boden (44) zur Ausbildung der Vorspannung rein elastisch verformt ist, wobei der Boden (44) der Lagerbüchse (42) elastisch ausgebildet ist und von seinem Zentrum ausgehend im Zustand vor der Montage mindestens zu 25% eine ebene Fläche zur Kontaktierung der Stirnseite eines Zapfens (22) aufweist.

2. Kreuzgelenk (20) gemäß einem der vorhergehenden Ansprüche, **dadurch gekennzeichnet, dass** das Radiallager (40) ein Nadellager ist.

3. Kreuzgelenk (20) gemäß Anspruch 2, **dadurch gekennzeichnet, dass** die Lagerbüchse (42) in Form einer Nadelbüchse ausgebildet ist.

4. Kreuzgelenk gemäß einem der vorhergehenden Ansprüche, **dadurch gekennzeichnet, dass** der Boden (44) der Lagerbüchse (42) elastisch ausgebildet ist und der Boden (44) der Lagerbüchse (42) von seinem Zentrum ausgehend im Zustand vor der Montage mindestens zu 25 % seiner Fläche eben ausgebildet ist und in diesem Bereich eine konstante Wandstärke aufweist.

5. Kreuzgelenk gemäß einem der vorhergehenden Ansprüche, **dadurch gekennzeichnet, dass** das Kreuz (21) als Kaltfließpressteil ausgebildet ist, wobei zumindest die Stirnseiten (24) eines der Zapfenpaare durch reine Umformung erzeugt ist.

6. Kreuzgelenk gemäß einem der vorhergehenden Ansprüche, **dadurch gekennzeichnet, dass** die Lagerbüchse (42) mit dem Joch (14, 32) verstemmt ist.

## Claims

1. Universal joint (20) for a steering shaft (11) for a motor vehicle, comprising a spider (21) having two pairs of pins which cross at right angles to one another and which can each be connected via a yoke (14, 32) to a shaft element of the steering shaft (11), wherein each pin (22) is radially mounted in its radial direction in the respective yoke (14, 32) via a radial bearing (40) and wherein each pin (22) comprises a respective end face (24) and wherein the radial bearing comprises a bearing bush (42), wherein the bearing bush comprises a base (44) and an outer ring (43) in one piece, wherein the end faces (24) of at least one of the pairs of pins are mounted on the base (44) of the bearing bush (42) in their axial direction,
**characterized in that**
the end faces (24) of the pins (22) of at least one of the pairs of pins are in contact with the base (44) under purely elastic preloading, wherein the end faces (24) which are in contact are designed to be convex in the contact region, and the base (44) is purely elastically deformed to form the preloading, wherein the base (44) of the bearing bush (42) is designed to be elastic and, starting from its centre, in the state prior to assembly, comprises, at least to the extent of 25%, a planar surface for contacting the end face of a pin (22).

2. Universal joint (20) according to one of the preceding claims, **characterized in that** the radial bearing (40) is a needle bearing.

3. Universal joint (20) according to Claim 2,
**characterized in that** the bearing bush (42) is designed in the form of a needle bush.

4. Universal joint according to one of the preceding claims, **characterized in that** the base (44) of the bearing bush (42) is designed to be elastic, and the base (44) of the bearing bush (42), starting from its centre, in the state prior to assembly, is designed with at least 25% of its surface to be planar and comprises a constant wall thickness in this region.

5. Universal joint according to one of the preceding claims, **characterized in that** the spider (21) is designed as a cold-extruded part, wherein at least the end faces (24) of one of the pairs of pins is produced by pure forming.

6. Universal joint according to one of the preceding claims, **characterized in that** the bearing bush (42) is caulked with the yoke (14, 32).

## Revendications

1. Joint universel (20) destiné à un arbre de direction (11) destiné à un véhicule automobile, le joint universel comprenant un croisillon (21) pourvu de deux paires d'axes qui sont croisées à angle droit l'une par rapport à l'autre et qui peuvent être reliées respectivement par le biais d'une mâchoire (14, 32) à un élément d'arbre de l'arbre de direction (11), chaque axe (22) étant monté radialement dans la mâchoire respective (14, 32) dans sa direction radiale par le biais d'un palier radial (40) et chaque axe (22) comportant respectivement un côté d'extrémité (24) et le palier radial comprenant un coussinet (42), le coussinet comportant d'une seule pièce un fond (44) et une bague extérieure (43), les côtés d'extrémité (24) d'au moins une des paires d'axes étant montés dans leur direction axiale au niveau du fond (44) du coussinet (42),
**caractérisé en ce que**
les côtés d'extrémité (24) des axes (22) d'au moins une des paires d'axes sont en contact avec le fond (44) sous précontrainte purement élastique, les côtés d'extrémité (24) en contact étant réalisés de manière convexe dans la région de contact et le fond (44) étant déformé de manière purement élastique pour former la précontrainte, le fond (44) du coussinet (42) étant conçu pour être élastique et comportant, depuis de son centre, dans l'état avant le montage, sur au moins 25 % une surface plane destinée à venir en contact avec le côté d'extrémité d'un axe (22).

2. Joint universel (20) selon l'une des revendications précédentes, **caractérisé en ce que** le palier radial (40) est un palier à aiguilles.

3. Joint universel (20) selon la revendication 2, **caractérisé en ce que** le coussinet (42) est conçu sous la forme d'un coussinet à aiguilles.

4. Joint universel selon l'une des revendications précédentes, **caractérisé en ce que** le fond (44) du coussinet (42) est conçu pour être élastique et le fond (44) du coussinet (42) est conçu pour être plat depuis son centre dans l'état avant le montage sur au moins 25 % de sa surface et a une épaisseur de paroi constante dans cette région.

5. Joint universel selon l'une des revendications précédentes, **caractérisé en ce que** le croisillon (21) est conçu comme une pièce extrudée à froid, au moins les côtés d'extrémité (24) de l'une des paires d'axes sont réalisés par déformation pure.

6. Joint universel selon l'une des revendications précédentes, **caractérisé en ce que** le coussinet (42) est maté avec la mâchoire (14, 32).
